# EUROPEAN PATENT SPECIFICATION

(11) **EP 3 462 696 B1**
(45) Date of publication and mention of the grant of the patent: **30.04.2025**
(21) Application number: 17194013.3
(22) Date of filing: 29.09.2017
(51) Int. Cl.: H04L 27/26, H04L 5/00

(54) **COMMUNICATION DEVICE AND METHOD FOR RADIO FREQUENCY COMMUNICATION**
KOMMUNIKATIONSVORRICHTUNG UND -VERFAHREN FÜR FUNKFREQUENZKOMMUNIKATION
DISPOSITIF DE COMMUNICATION ET PROCÉDÉ DE COMMUNICATION PAR FRÉQUENCE RADIO

(43) Date of publication of application: 03.04.2019
(73) Proprietor: Apple Inc., Cupertino, CA 95014 (US)
(72) Inventor: SCHOLAND, Tobias, 47259 Duisburg (DE); GU, Jian, Fremont, CA 94555 (US); GUNZELMANN, Bertram, 85579 Neubiberg (DE); JORDAN, Markus, 45896 Gelsenkirchen (DE); ESCH, Thomas, 41564 Kaarst (DE)
(74) Representative: Lang, Johannes

(56) References cited:
- WO-A1-2017/010751
- WO-A1-2017/039373
- AU-A1- 2016 294 269

## Description

### Technical Field

The present disclosure relates to communication devices and methods for radio frequency communication.

### Background

**In** a scenario, a communication device receives a radio frequency signal. The communication device may process the radio frequency signal based on a shift frequency and a baseband frequency. It may be desirable to enhance a performance of the communication device by tuning the processing of the radio frequency signal.
WO 2017/010751 Al relates to a downlink signal reception method and apparatus of a low-cost machine-type terminal in a wireless communication system, and particularly to the selection of a best narrowband DC subcarrier.

### Summary

The invention is defined by the appended claims. The dependent claims define advantageous embodiments.

### Brief Description of the Drawings

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:
FIG. 1 shows a scenario in which a base station and a communication device transmit and receive signals based on a radio frequency wireless connection;
FIG. 2 shows a schematic diagram of a representation of a radio frequency signal in the frequency domain and a baseband frequency range;
FIG. 3 shows a flow diagram that illustrates a method for processing the radio frequency signal;
FIG. 4 shows a schematic diagram of component signals associated with a frequency shifted signal;
FIG. 5 shows a communication device that receives and processes the radio frequency signal;
FIG. 6 shows a schematic diagram of frequencies that may be associated with the radio frequency signal and frequencies that may be associated with a second signal;
FIG. 7 shows a flow diagram that illustrates a method for processing the radio frequency signal;
FIG. 8 shows a schematic diagram of component signals based on the second signal;
FIG. 9 shows a schematic diagram of a communication device;
FIG. 10 shows a schematic diagram of component signals based on the second signal;
FIG. 11 shows a schematic diagram of a communication device;
FIG. 12 shows a schematic diagram of frequencies that may be associated with the radio frequency signal and frequencies that may be associated with the second signal;
FIG. 13 shows a flow diagram that illustrates a method;
FIG. 14 shows a schematic diagram of component signals based on the second signal;
FIG. 15 shows a schematic diagram of a communication device;
FIG. 16 shows a flow diagram that illustrates a process based on a communication device;
FIG. 17 shows a flow diagram that illustrates a method for radio frequency communication;
FIG. 18 shows a flow diagram that illustrates a method for radio frequency communication;
FIG. 19 shows a method for radio frequency communication; and
FIG. 20 shows a method for radio frequency communication.

### Description

The following detailed description refers to the accompanying drawings that show, by way of illustration, specific details and embodiments in which the invention may be practiced.

A "circuit" may be understood as any kind of a logic implementing entity, which may be special purpose circuitry or a processor executing software stored in a memory, firmware, or any combination thereof. Further, a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions which will be described in more detail below may also be understood as a "circuit". It is understood that any two (or more) of the described circuits may be combined into a single circuit with substantially equivalent functionality, and conversely that any single described circuit may be distributed into two (or more) separate circuits with substantially equivalent functionality. In particular with respect to the use of "circuitry" in the claims included herein, the use of "circuit" may be understood as collectively referring to two or more circuits.

The representation of a signal represented in the frequency domain may be based on a Fourier transformation of the signal represented in the time domain to the frequency domain. Component radio signals based on the signal represented in the frequency domain may be associated with frequencies based on the representation of the signal in the frequency domain.

A communication device may receive radio frequency signals. A first radio frequency signal of the received radio frequency signals may include a distorted signal component and undistorted signal components. A second radio frequency signal of the received radio frequency signals may include only undistorted signal components. For example the second radio frequency signal may be a narrowband signal that is included in the first radio frequency signal. The communication device may be configured to process the radio frequency signal based on a shift frequency and a baseband frequency. The communication device may be configured to tune a shift frequency based on the radio frequency signal. Further, in an example, the communication device may be configured to tune a baseband frequency based on the radio frequency signal. For example, the tuned shift frequency or baseband frequency may be determined before the radio frequency signal is received by the communication device.

Various aspects of this disclosure provide a communication device that may include a receiver configured to receive a radio frequency signal. Further, the communication device may include a processor configured to determine a shift frequency based on a component radio frequency signal. Further, the processor may be configured to determine a second signal based on the radio frequency signal. The component radio frequency signal may be dependent from the radio frequency signal and associated with a frequency related to the radio frequency signal represented in the frequency domain. The second signal may be determined from shifting frequencies related to the radio frequency signal represented in the frequency domain by the shift frequency. Thus, the communication device may be configured to efficiently and reliably process the radio frequency signal in the baseband. Further, the communication device may be configured to flexibly and reliably process various types of signals. Moreover, the communication device may be configured to effectively process the radio frequency signal at a low power consumption.

This disclosure further provides a communication device that may include a receiver configured to receive a radio frequency signal. Further, the communication device may include a processor configured to determine a second signal based on the radio frequency signal. Further, the processor may be configured to determine a baseband frequency based on a component radio frequency signal. The second signal may be determined from shifting frequencies related to the radio frequency signal represented in the frequency domain by a shift frequency. The component radio frequency signal may be dependent from the radio frequency signal and associated with a frequency related to the radio frequency signal represented in the frequency domain. Thus, the communication device may be configured to efficiently and reliably process the radio frequency signal in the baseband. Further, the communication device may be configured to effectively process the radio frequency signal at a low power consumption. Moreover, the communication device may be configured to flexibly and reliably process various types of signals.

Furthermore, a method for radio frequency communication may be provided that may include receiving a radio frequency signal. Further, the method may include determining a shift frequency based on a component radio frequency signal. Moreover, the method may include determining a second signal based on the radio frequency signal. The component radio frequency signal may be dependent from the radio frequency signal and associated with a frequency related to the radio frequency signal represented in the frequency domain. The second signal may be determined from shifting frequencies related to the radio frequency signal represented in the frequency domain by the shift frequency. Thus, the method may be configured to flexibly and reliably process various types of signals. Moreover, the method may be configured to effectively process the radio frequency signal at a low power consumption. Further, the method may be configured to efficiently and reliably process the radio frequency signal in the baseband.

This disclosure further provides a method for radio frequency communication that may include receiving a radio frequency signal. Further, the method may include determining a second signal based on the radio frequency signal. Moreover, the method may include determining a baseband frequency based on a component radio frequency signal. The second signal may be determined from shifting frequencies related to the radio frequency signal represented in the frequency domain by a shift frequency. The component radio frequency signal may be dependent from the radio frequency signal and associated with a frequency related to the radio frequency signal represented in the frequency domain. Thus, the method may be configured to efficiently and reliably process the radio frequency signal in the baseband. Further, the method may be configured to effectively process the radio frequency signal at a low power consumption. Moreover, the method may be configured to flexibly and reliably process various types of signals.

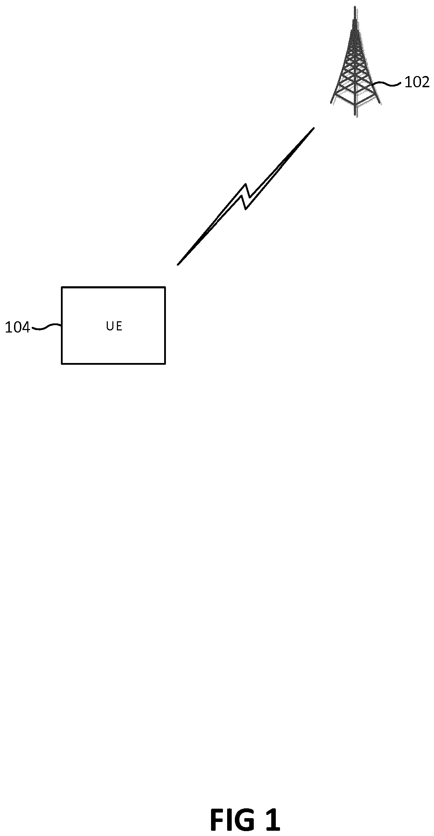

**FIG.** 1 shows a scenario in which a base station 102 and a communication device 104 transmit and receive signals based on a radio frequency connection. The base station 102 may be configured to transmit a radio frequency signal in accordance with a radio communication technology. The communication device 104 may be configured to receive and process the transmitted radio frequency signal.

In an example, the radio communication technology may be based on Orthogonal Frequency Division Multiplexing. Further, the radio frequency signal may include a DC (Direct Current) subcarrier signal that may be associated with a DC subcarrier frequency.

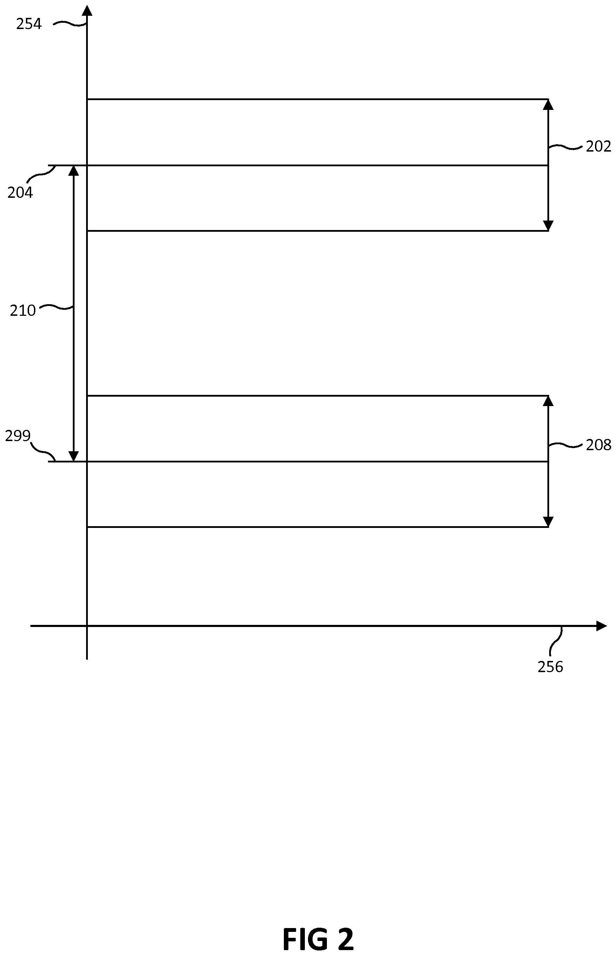

**FIG.** 2 shows a schematic diagram of a representation of the radio frequency signal in the frequency domain and a baseband frequency range 208. The baseband frequency range may include a baseband frequency 299. The baseband frequency 299 may be a center frequency of the baseband frequency range 208. The diagram may have a first axis 254 that may indicate frequencies and a second axis 256 that may indicate time.

The radio frequency signal may include a first signal. The first signal may be associated with a first frequency range 202 related to the first signal represented in the frequency domain. The first frequency range may include a center frequency 204 of the first frequency range 202. A difference frequency of the center frequency 204 and the baseband frequency 299 may be referenced by the reference sign 210.

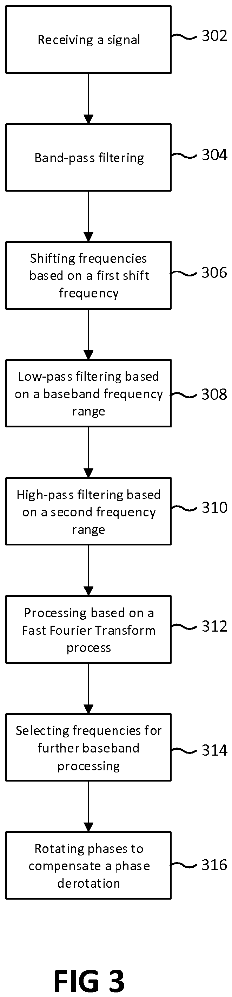

**FIG.** 3 shows a flow diagram that illustrates a method for processing the radio frequency signal based on Fig. 2.

The method may include, in 302, receiving the radio frequency signal.

The method may further include, in 304, band-pass filtering the radio frequency signal based on preserving the first signal.

The method may further include, in 306, shifting frequencies based on the band-pass filtered signal and a first shift frequency to form a frequency shifted signal. The first shift frequency may be the difference frequency 210. The baseband frequency range 208 may include the frequencies of a frequency shifted first frequency range that is associated with the frequency shifted signal. In an example, the shifting of frequencies may be based on mixing the band-pass filtered signal with another signal.

The method may further include, in 308, low-pass filtering the frequency shifted signal based on the first frequency range 202 and the first shift frequency 210. The low-pass filtering may be configured to remove frequencies that are not included in the frequency shifted first frequency range.

The method may further include, in 310, high-pass filtering the low-pass filtered signal based on a second frequency range. The high-pass filtering may be configured to remove a signal that is associated with the second frequency range related to the low-pass filtered signal represented in the frequency domain from the low-pass filtered signal. The second frequency range may be centered around the baseband frequency 299.

Thus, if the DC subcarrier frequency is a center frequency of the first frequency range 202 the high-pass filtering may be configured to remove a distortion signal based on the DC subcarrier signal. The distortion signal may be associated with a distortion frequency range related to the distortion signal represented in the frequency domain. The high-pass filtering may be configured such that the second frequency range includes the distortion frequency range. The distortion signal may be based on the frequency shifting of the DC subcarrier frequency to the distortion frequency range by the first shift frequency 210.

The method may further include, in 312, processing the high-pass filtered signal based on a Fast Fourier Transform (FFT) process. The FFT process may be based on 128 data points. If the first signal is in accordance with a narrowband Internet-of-Things communication technology the FFT process may for example be based on sixteen data points.

The method may further include, in 314, selecting frequencies based on the FFT processed signal and a multiplexer for further baseband signal processing, for example for channel estimation and channel equalization. In case the signal is in accordance with the Long Term Evolution communication technology, the frequencies may be subcarrier frequencies that are associated with resource elements.

The method may further include, in 316, rotating phases of component signals based on the FFT processed signal and the selected frequencies. The rotating may be configured to compensate a rotation based on the processed signal, a cyclic prefix and the FFT process.

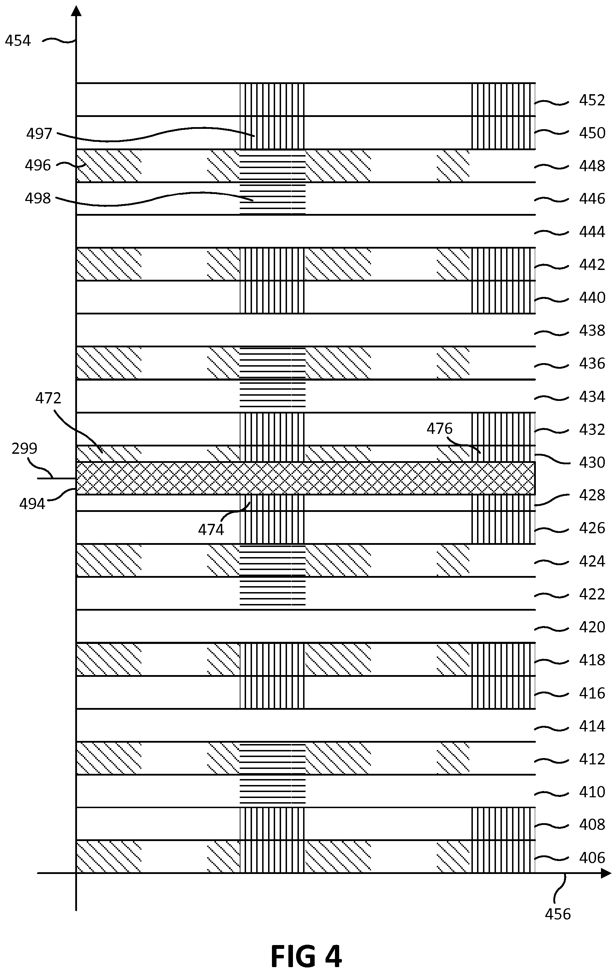

**FIG.** 4 shows a schematic diagram of component signals associated with the frequency shifted signal based on the method based on Fig. 3. The diagram may have a first axis 454 that may indicate the associated frequencies and a second axis 456 that may indicate time. The component signals may be based on the first signal.

The frequency shifted signal may include component signals 406, 408, 410, 412, 414, 416, 418, 420, 422, 424, 426, 428, 430, 432, 434, 436, 438, 440, 442, 444, 446, 448, 450 and 452. The component signals 406 to 452 may be associated with subcarrier frequencies related to the frequency shifted signal represented in the frequency domain, respectively.

The frequency shifted signal may include reference signals of a plurality of types that may be indicated by diagonal hatching, vertical hatching and horizontal hatching. As an example, the component signals 448, 450 and 446 may include reference signals 496, 497 and 498. The types of the reference signals 496, 497 and 498 may be different from each other as indicated by the hatching.

The second frequency range referenced by 494 may include the distortion frequency range. The frequency shifted signal may be distorted in the distortion frequency range. The distortion frequency range may be based on the DC subcarrier signal and the frequency shifting. The component signals 428 and 430 may be at least partially included in the distortion frequency range and consequently distorted. Therefore, reference signals 472, 474, and 476 that may be included in the component signals 428 and 430 may be distorted. For example, the reference signals may be required to determine channel characteristics required for processing the component signals 406 to 452. A further processing, for example to recover data packets or the reference signals, based on the distorted component signals 428 and 430 may be inefficient. Further, the distortion frequency range may include the baseband frequency 299. In an example, the distortion frequency range may indicate a main distortion based on the frequency shifted signal.

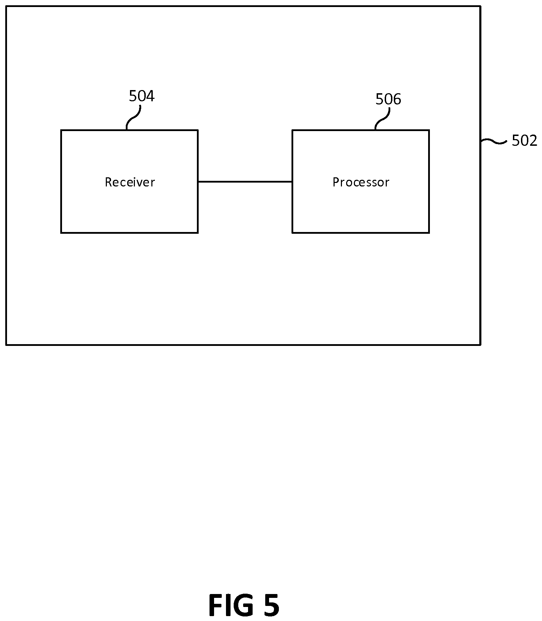

FIG. 5 shows a communication device 502. The communication device 502 may include a receiver 504 configure to receive a radio frequency signal and a processor 506. The processor 506 may be configured to determine a second shift frequency based on a first component radio frequency signal. The first component radio frequency signal may be dependent from the radio frequency signal and associated with a first frequency related to the radio frequency signal represented in the frequency domain.

Further, the processor 506 may be configured to determine a second signal based on the radio frequency signal. The processor 506 may be configured to determine the second signal from shifting frequencies related to the radio frequency signal represented in the frequency domain by the second shift frequency.

Thus, the communication device 502 may be configured to efficiently and effectively reduce the loss of signals that are required for reliably processing the radio frequency signal.

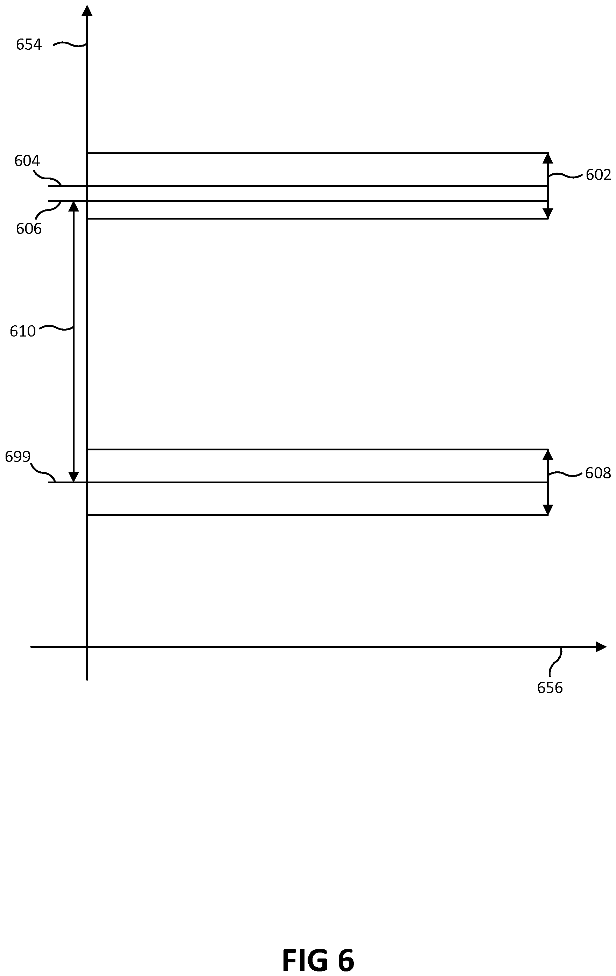

FIG. 6 shows a schematic diagram of frequencies that may be associated with the radio frequency signal represented in the frequency domain and frequencies that may be associated with the second signal represented in the frequency domain based on the communication device based on FIG. 5. The diagram may have a first axis 654 that may indicate the associated frequencies and a second axis 656 that may indicate time.

The radio frequency signal may include a third radio frequency signal that may be associated with a third frequency range 602 related to the third radio frequency signal represented in the frequency domain. The third frequency range 602 may include a center frequency 604 and the first frequency referenced by 606.

In an example, the first signal may include the third radio frequency signal. For example, the third radio frequency signal may be a narrowband signal. Further, the first frequency range 202 may include the third frequency range 602.

In an example, the third radio frequency signal may be in accordance with Orthogonal Frequency Division Multiplexing. Further, exemplary, the first signal may be in accordance with Orthogonal Frequency Division Multiplexing.

In an example, the first signal and the third radio frequency signal may be in accordance with a radio communication technology. For example, the first signal may be in accordance with a Long Term Evolution communication technology and the third radio frequency signal may be in accordance with a narrowband Internet-of-Things communication technology or a Long Term Evolution category M1 communication technology.

The second signal may be associated with frequencies that are included in a baseband frequency range 608. Further, the baseband frequency range 608 may include a baseband frequency 699. The baseband frequency 699 may be a center frequency of the baseband frequency range 699. The communication device 502 may be configured to process the second signal based on the baseband frequency 699 and the baseband frequency range 608.

The processor 506 may be configured to determine the second shift frequency referenced by 610 based on a difference of the first frequency 606 and the baseband frequency 699. Further, the processor 506 may be configured to determine the second signal based on shifting the frequencies related to the radio frequency signal represented in the frequency domain based on the radio frequency signal by the second shift frequency 610.

In an example, the processor 506 may be configured to determine the second shift frequency 610 based on the radio frequency signal before the radio frequency signal is received by the receiver 504.

In an example, the processor 506 may be configured to determine the second shift frequency 610 based on the received radio frequency signal.

In an example, the processor 506 may be configured to determine the second signal based on shifting the frequencies of the third frequency range 602 based on the received third radio frequency signal by the second shift frequency 610. Moreover, the processor 506 may be configured to determine the second shift frequency 610 such that the baseband frequency range 608 may include the frequency shifted third radio frequency signal that may be shifted by the second shift frequency 610.

In an example, the processor 506 may be configured to determine the second shift frequency 610 such that the second frequency range 494 excludes frequencies that are associated with component signals that include reference signals.

In an example, the reference signals may be in accordance with the radio communication technology.

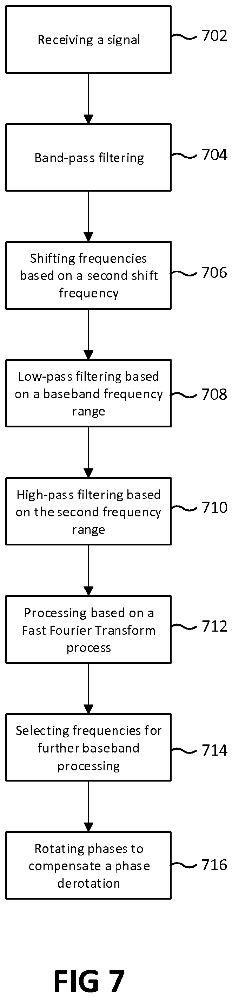

**FIG.** 7 shows a flow diagram that illustrates a method based on the communication device based on FIG. 5. The method may, in 702, 704, 710, 712, 714 and 716, be based on 302, 304, 310, 312, 314 and 316 of the method based on Fig. 3.

The method may further include, in 706, shifting frequencies based on the band-pass filtered signal and the second shift frequency 610 to form the second signal. The processor 506 may be configured to determine the second shift frequency 610 based on the first component radio frequency signal and the radio frequency signal such that the first frequency 606 may be shifted to a baseband frequency 699 that is included in the second frequency range 494.

The processor 506 may be configured to determine the second shift frequency 610 such that the high-pass filtering based on 710 may remove a component signal based on the first component radio frequency signal. Thus, the communication device 502 may be configured to high-pass filter independent from whether the signal to be filtered includes the distortion signal. In case the signal to be filtered includes the distortion signal the high-pass filtering may be configured to remove the distortion signal by filtering based on the second frequency range 494.

The method may further include, in 708, low-pass filtering the second signal based on the third frequency range 602, the second shift frequency 610 and the baseband frequency 699. The low-pass filtering may be configured to remove component radio frequency signals based on the second signal that are associated with frequencies that are not included in the baseband frequency range 608.

The method may further include, in 714, selecting subcarrier frequencies that are associated with the third radio frequency signal.

In case the third radio frequency signal is in accordance with the Long Term Evolution category M1 communication technology the third frequency range may include 72 subcarrier frequencies that are associated with the third radio frequency signal. The selecting may be configured to select the 72 subcarrier frequencies that are associated with the third radio frequency signal. For example, the bandwidth of the third frequency range may be about 1.4 MHz.

In case the third radio frequency signal is in accordance with the narrowband Internet-of-Things communication technology the third frequency range may include 12 subcarrier frequencies that are associated with the third radio frequency signal. The selecting may be configured to select the 12 subcarrier frequencies that are associated with the third radio frequency signal.

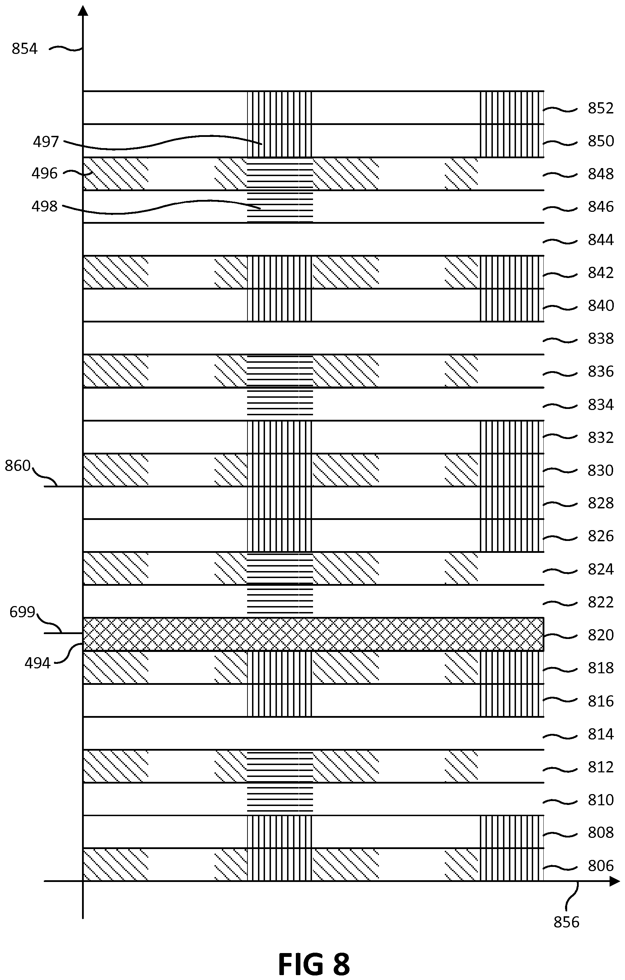

**FIG.** 8 shows a schematic diagram of component radio frequency signals based on the second signal that are processed based on the communication device based on FIG. 5. The second signal may be based on the third radio frequency signal. The diagram may have a first axis 854 that may indicate the frequencies that are associated with the component radio frequency signals and a second axis 856 that may indicate time. The frequencies shown in FIG. 8 are included in the baseband frequency range 608.

The second signal may include component signals 806, 808, 810, 812, 814, 816, 818, 820, 822, 824, 826, 828, 830, 832, 834, 836, 838, 840, 842, 844, 846, 848, 850 and 852. The component signals 806 to 852 may be associated with subcarrier frequencies related to the second signal represented in the frequency domain, respectively.

In an example, the determined first component radio frequency signal may not include reference signals. By shifting the first frequency 606 by the second shift frequency 610, the frequency shifting may shift the first component radio frequency signal to the component signal 820. Further, in an example, the second frequency range 494 may include only the component signal 820. Thus, the high-pass filtering based on 710 may only remove component signals that do not include reference signals. Thus, the communication device 502 may be configured to avoid reference signal corruption by a DC subcarrier.

A second frequency 860 may be based on shifting the center frequency 604 by the second shift frequency 610. The second frequency 860 may differ from the baseband frequency 699 by a frequency difference that allows to process the second signal based on the Fast Fourier Transform without further frequency shifting.

In an example, the processor 506 may be configured to determine the second shift frequency 610 such that the second frequency range 494 excludes frequencies that are associated with reference signals based on the second signal. Thus, the communication device 502 may be configured to avoid the loss of reference signals. Therefore, the communication device 502 may be configured to increase the performance.

In an example, the processor 506 may be configured to determine the second shift frequency 610 such that the second frequency range 494 excludes frequencies that are associated with component signals that include a type of reference signal based on the second signal, for example cell specific reference signals, demodulation reference signals and channel state information reference signals. Thus, the processor 506 may be configured to avoid the loss of performance sensitive reference signals, as for example the cell specific reference signals.

In an example, the processor 506 may be configured to determine the second shift frequency 610 such that the second frequency range 494 excludes frequencies that are associated with component signals that include a plurality of types of reference signals based on the second signal. Thus, the communication device 502 may be configured to efficiently reduce adverse effects on signal processing by reducing the loss of signals and flexibly avoiding the loss of further data.

In an example, the processor 506 may be configured to determine the second shift frequency 610 such that the second frequency range 494 only includes frequencies that may be associated with component signals that include a first number of reference signals or first number of type of reference signals based on the second signal. Further, the processor 406 may be configured to determine the second shift frequency 610 such that the first number of reference signals is smaller than a threshold. Thus, the communication device 502 may be configured to reliably provide a degree of performance in an efficient manner.

In an example, the processor 506 may be configured to determine the second shift frequency 610 such that the second frequency range 494 excludes frequencies that may be associated with component signals that include a second number of reference signals or second number of type of reference signals based on the second signal. The second number may be greater than a second threshold.

In an example, processor 506 may be configured to determine the second shift frequency 610 such that the high-pass filtering may only remove a group of subcarrier component signals that may be included in a fourth frequency range centered around the first frequency 606. The width of the fourth frequency range may be the width of the third frequency range 602.

In an example, the processor 506 may be configured to determine third component signals based on the second signal. Further, the processor 506 may be configured to determine a fourth component signal based on a FFT process based on the third component signals. The processor 506 may be configured to determine the second shift frequency 610 based on the third component signals. For example, the processor 506 may be configured to select component radio frequency signals based on the third radio frequency signal such that the third component signals exclude reference signals, exclude reference signals of a type of reference signal and/or include a number of reference signals that is smaller than a threshold. Thus, the communication device 502 may be configured to effectively avoid the loss of reference signals to increase the performance of the communication device 502. Further, the communication device 502 may be configured to flexibly process signals based on an uncomplex high-pass filter.

In an example, the type of the third radio frequency signal may be a modulation scheme. The modulation scheme may be, for example, at least one of Binary Phase-Shift Keying, Quadrature Phase-Shift Keying, Sixteen Quadrature Amplitude Modulation, Sixty Four Quadrature Amplitude Modulation, Two Hundred Fifty Six Quadrature Amplitude Modulation or One Thousand Twenty Four Quadrature Amplitude Modulation.

It should be noted that aspects of communication device based on FIG. 5 may be combined with aspects of the communication device based on FIG. 1.

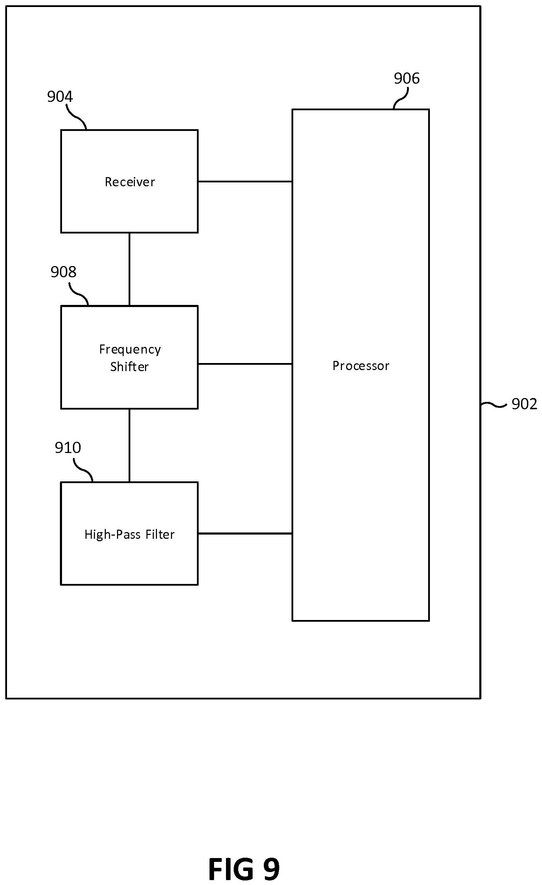

**FIG.** 9 shows a schematic diagram of a communication device 902 that may include a receiver 904, a processor 906, a frequency shifter 908 and a high-pass filter 910. The receiver 904 may be configured to receive the radio frequency signal. The radio frequency signal may include the first signal that may be in accordance with the Long Term Evolution communication technology.

The processor 906 may be configured to determine the first component radio frequency signal based on the second component radio frequency signals. The second component radio frequency signals may be based on the radio frequency signal and associated with frequencies related to the radio frequency signal represented in the frequency domain. The processor 906 may be configured to determine the second shift frequency 610 based on the first component radio frequency signal.

The processor 906 may be configured to determine the second signal based on shifting frequencies related to the radio frequency signal represented in the frequency domain based on the radio frequency signal by the second shift frequency 610. Further, the processor 906 may be configured to control the frequency shifter 908 to form the second signal based on shifting frequencies of the third frequency range 602 based on the radio frequency signal by the second shift frequency 610. Further, the high-pass filter 910 may be configured to filter the output signal of the frequency shifter 908 to remove component signals that are associated with frequencies included in the second frequency range 494.

Thus, the communication device 902 may be configured to efficiently and effectively reduce the loss of signals that are required for reliably processing the radio frequency signal.

The processor 906 may be configured to select the first component radio frequency signal from the second component radio frequency signals. Thus, the communication device 902 may be configured to effectively determine the first component radio frequency signal in an efficient manner.

In an example, the second component radio frequency signals may include second reference signals. The frequencies that are associated with the second reference signals may be included in a frequency range that has the same width as the second frequency range 494. The processor 906 may be configured to determine the second shift frequency 610 based on the second reference signals. Thus, the communication device 902 may be configured to efficiently and effectively reduce the loss of reference signals that are required for reliably processing the radio frequency signal.

In an example, the second reference signals may be in accordance with the radio communication technology.

In an example, the processor 906 may be configured to determine the second frequencies based on a radio communication technology.

In an example, the processor may be configured to determine the frequencies that are associated with the second component radio frequency signals based on a fast frequency hopping pattern in accordance with the radio communication technology. In an example, the second frequencies are associated with a resource block based on the Long Term Evolution radio communication technology.

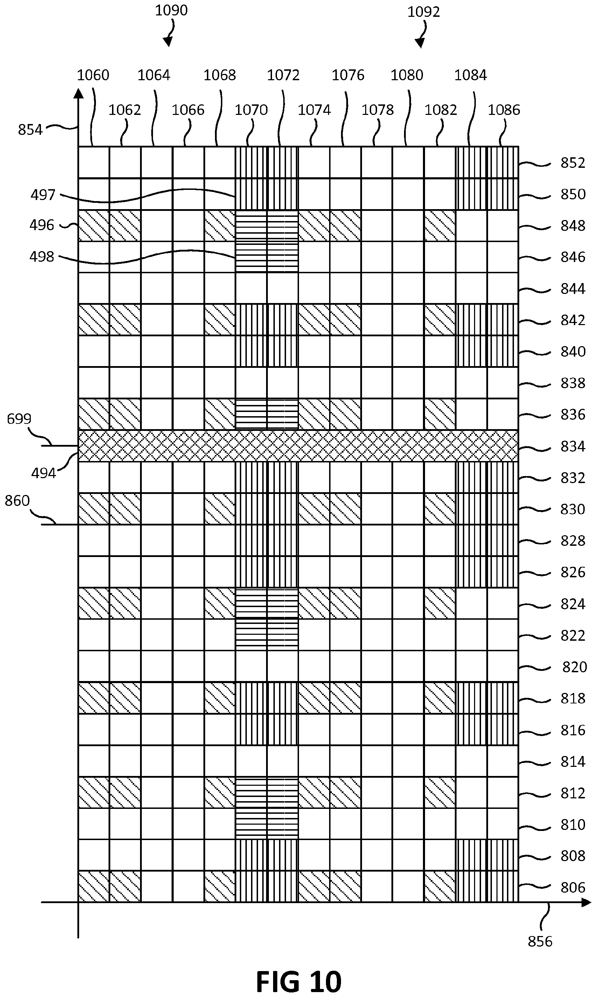

**FIG. 10** shows a schematic diagram of component radio frequency signals based on the second signal which are processed based on the communication device based on Fig. 9. The second signal may be based on the third radio frequency signal. Further, the third radio frequency signal may be in accordance with the Long Term Evolution communication technology.

In an example, the radio frequency signal may be in accordance with the Long Term Evolution radio communication technology.

A first slot 1090 based on the second signal may be associated with time periods 1060, 1062, 1064, 1066, 1068, 1070 and 1072. Further, a second slot 1092 may be associated with time periods 1074, 1076, 1078, 1080, 1082, 1084 and 1086. Each component signal of the component signals 806 to 852 may include resource elements that are associated with the time periods 1060 to 1086, respectively. The resource elements may include reference signals, respectively. Each reference signal may be based on a type of a plurality of types of reference signals. Resource elements that include cell specific reference signals may be indicated by diagonal hatching, as for example resource element 496. Resource elements that include demodulation reference signals may be indicated by vertical hatching, as for example resource element 497. Resource elements that include channel state information reference signals may be indicated by horizontal hatching, as for example resource element 498.

Each component radio frequency signal of the third radio frequency signal may include at least one number of resource elements that include reference signals of at least one type and are associated with the slots 1090 and 1092. In an example, the processor 906 may be configured to select the first component radio frequency signal based on the numbers of resource elements that include reference signals, for example reference signals of a type, and are associated with at least one of the slots 1090 and 1092.

In an example, the second component radio frequency signals may be based on the component signals 830 to 852 of slot 1090, 1092 or both slots 1090 and 1092.

In an example, the second component radio frequency signals may be based on the component signals 806 to 828 of slot 1090, 1092 or both slots 1090 and 1092.

In an example, the second component radio frequency signals may be based on the component signals 806 to 852 of slot 1090, 1092 or both slots 1090 and 1092.

Thus, the communication device 902 may be configured to flexibly and efficiently determine the resource elements that are required to enhance a performance of the communication device 902. Further, the communication device 902 may be configured to reduce the number of hybrid automatic repeat requests (HARQ).

In an example, the second component radio frequency signals include fourth signals. The processor 906 may be configured to determine the first component radio frequency signal based on a first number of the fourth signals.

In an example, the second component radio frequency signal include fourth signals. The processor 906 may be configured to determine the first component radio frequency signal based on types of the fourth signals.

Thus, the communication device 902 may be configured to flexibly determine the shift frequency 610 in an efficient manner.

In an example, the fourth signals are reference signals.

In an example, the second component radio frequency signals are associated with first numbers of reference signals of the second component radio frequency signals, respectively. The processor 906 may be configured to determine the first component radio frequency signal such that a number of reference signals of the first component radio frequency signal is the smallest number from the first numbers. Thus, the communication device 902 may be configured to effectively determine the shift frequency 610 in an efficient manner.

In an example, the second component radio frequency signals are associated with first numbers of reference signals of the second component radio frequency signals, respectively. Moreover, first weights are associated with types of the reference signals of the second component radio frequency signals. Further, the first numbers are associated with the first weights based on the types of the reference signals. First weighted numbers are weighted based on the first numbers and the first weights. Further, the second component radio frequency signals are associated with second numbers of fourth signals of the second component radio frequency signals, respectively. The fourth signals exclude reference signals. Second weights are associated with types of the fourth signals. Further, the second numbers are associated with the second weights based on the types of the fourth signals. Second weighted numbers are weighted based on the second numbers and the second weights. The processor 906 may be configured to select the first component radio frequency signal based on the first weighted numbers and the second weighted numbers. Thus, the processor 906 may be configured to effectively process the radio frequency signal in the baseband in a flexible manner.

It should be noted that aspects of communication device based on FIG. 9 may be combined with aspects of the communication devices based on FIG. 1 and FIG. 5.

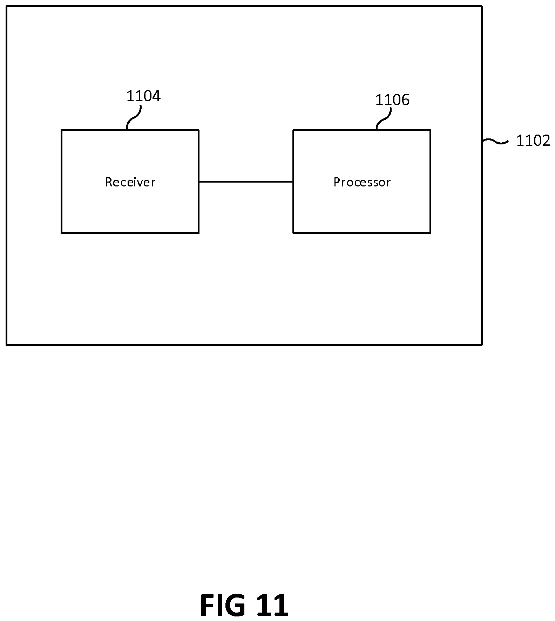

**FIG.** 11 shows a schematic diagram of a communication device 1102 that may include a receiver 1104 and a processor 1106. The receiver 1104 may be configured to receive a radio frequency signal.

Further, the processor 1106 may be configured to determine the second signal based on the radio frequency signal. The processor may be configured to determine the second signal from shifting frequencies related to the radio frequency signal represented in the frequency domain by a shift frequency.

The processor 1106 may be configured to determine a baseband frequency based on the first component radio frequency signal. The first component radio frequency signal may be dependent from the radio frequency signal and associated with a frequency related to the radio frequency signal represented in the frequency domain.

Thus, the communication device 1102 may be configured to efficiently and effectively reduce the loss of signals that are required for reliably processing the radio frequency signal. Moreover, the communication device 1102 may be configured to efficiently and effectively process the radio frequency signal. By adapting the baseband frequency based on the first component radio frequency signal, the processor 1106 may be configured to enhance the performance of the communication device 1102.

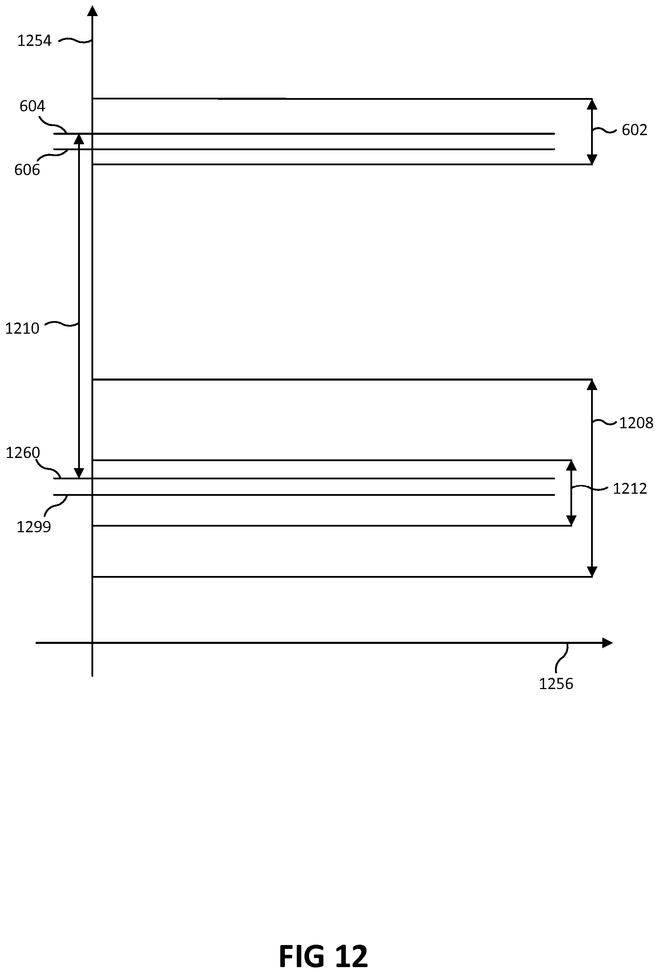

**FIG. 12** shows a schematic diagram of frequencies that may be associated with the radio frequency signal represented in the frequency domain and frequencies that may be associated with the second signal represented in the frequency domain based on the communication device based on FIG. 11. The diagram may have a first axis 1254 that may indicate the frequencies and a second axis 1256 that may indicate time.

The radio frequency signal may include the third radio frequency signal that may be associated with the third frequency range 602. The third frequency range 602 may include the center frequency 604 of the third frequency range 602 and the first frequency 606.

The communication device 1102 may be configured to shift the third frequency range 602 by a third shift frequency 1210 to a processing frequency range 1212 that is included in the filter frequency range 1208. Further, the processor 1106 may be configured to shift the center frequency 604 of the third frequency range 602 by the third shift frequency 1210 to a third frequency 1260 that may be included in a filter frequency range 1208. In an example, the third frequency 1260 may be the center frequency of the filter frequency range 1208.

In an example, the filter frequency range 1208 may be the baseband frequency range based on a shifted signal that is shifted based on the radio frequency signal.

In an example, the filter frequency range 1208 may be the baseband frequency range of the second signal.

The processor 1106 may be configured to determine a baseband frequency 1299 such that the first frequency 606 is shifted to the baseband frequency 1299 based on the third shift frequency 1210. Further, the communication device 1102 may be configured to process the second signal based on the baseband frequency 1299.

In an example, the processor 1106 may be configured to determine the baseband frequency 1299 based on the radio frequency signal before the radio frequency signal is received by the receiver 1104.

In an example, the processor 1106 may be configured to determine the baseband frequency 1299 based on the received radio frequency signal.

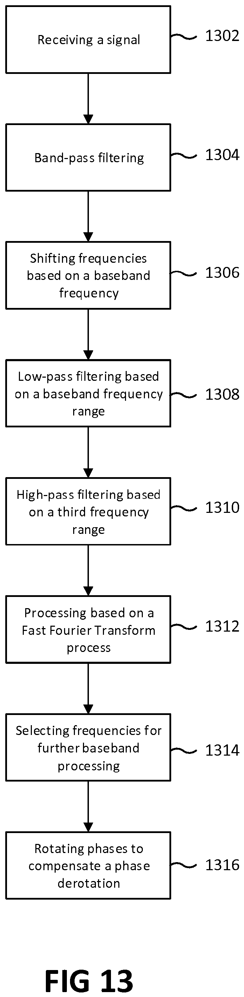

**FIG. 13** shows a flow diagram that illustrates a method based on the communication device based on FIG. 11. The method may, in 1302, 1304, 1308, 1312, 1314 and 1316, be based on 302, 304, 308, 312, 314 and 316 of the method based on Fig. 3.

The method may further include, in 1306, shifting frequencies based on the band-pass filtered signal and the baseband frequency 1299 to form the second signal. The processor 1106 may be configured to determine the baseband frequency 1299 based on the first component radio frequency signal based on the radio frequency signal such that the first frequency 606 may be shifted to the baseband frequency 1299.

The method may further include, in 1308, low-pass filtering the second signal based on the filter frequency range 1208. The low-pass filtering may be configured to remove component radio frequency signals that are associated with frequencies that are not included in the frequency range that is associated with the second signal represented in the frequency domain.

The method may further include, in 1310, high-pass filtering the low-pass filtered signal based on a fifth frequency range. The high-pass filtering may be configured to remove a signal from the low-pass filtered signal that is associated with the fifth frequency range related to the low-pass filtered signal represented in the frequency domain. The fifth frequency range may be centered around the baseband frequency 1299.

The processor 1106 may be configured to determine the baseband frequency 1299 such that the high-pass filtering may remove a component signal based on the first component radio frequency signal. Thus, the communication device 1102 may be configured to high-pass filter independent from the condition that the signal to be filtered includes the distortion signal. In case the signal to be filtered includes the distortion signal the high-pass filtering may be configured to remove the distortion signal by filtering based on the fifth frequency range.

In an example, the processor 1106 may be configured to determine the baseband frequency 1299 such that the high-pass filtering may only remove a group of subcarrier component radio frequency signals that may be included in the fourth frequency range centered around the first frequency 606.

The method may further include, in 1314, selecting subcarrier frequencies that are associated with the third radio frequency signal.

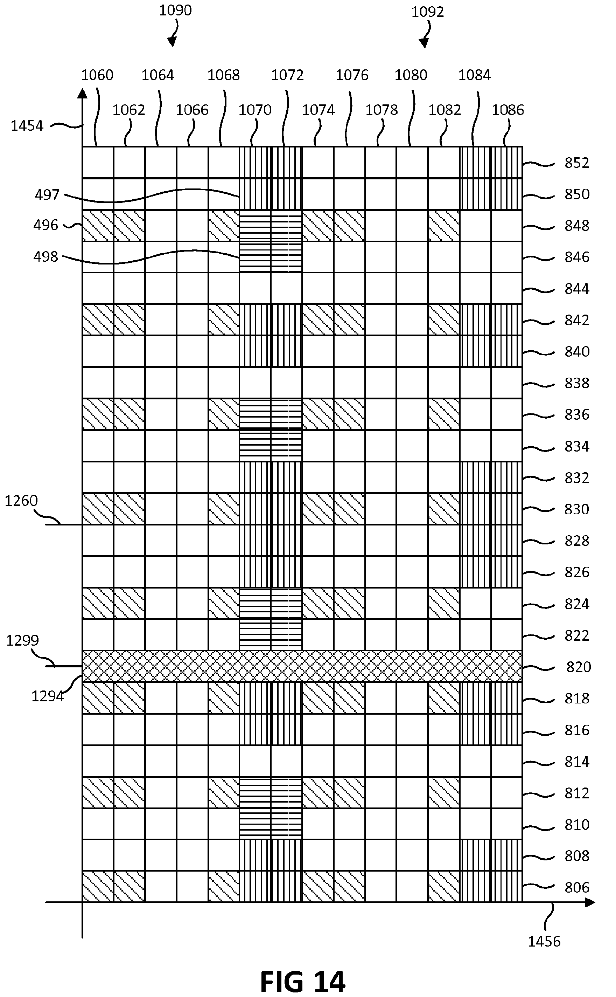

**FIG. 14** shows a schematic diagram of component signals based on the second signal which are processed based on the communication device based on Fig. 11. The second signal may be based on the third radio frequency signal.

Each component radio frequency signal of the third radio frequency signal may include at least one number of resource elements that include reference signals of at least one specified type and are associated with the slots 1090 and 1092. The processor 1106 may be configured to select the first component radio frequency signal from the component radio frequency signals of the third radio frequency signal. In an example, the processor 1106 may be configured to select the first component radio frequency signal based on the numbers of resource elements that include reference signals of a specified type and are associated with the slots 1090 and 1092.

The processor 1106 may be configured to determine the baseband frequency 1299 based on a frequency difference of the first frequency 606 and the center frequency 604 of the third frequency range 602.

The processor 1106 may be configured to determine the baseband frequency 1299 such that the fifth frequency range referenced by 1294 excludes frequencies that are associated with resource elements that include reference signals of cell specific reference signals and demodulation reference signals. Thus, the communication device 1102 may be configured to flexibly and efficiently determine the type of resource elements that are required to enhance a performance of the communication device. Further, the communication device 1102 may be configured to reduce the number of hybrid automatic repeat requests.

In an example, the third component radio frequency signals may be based on the second signal. Further, the processor 1106 may be configured to determine the fourth component signal based on the FFT process based on the third component signals. The processor 1106 may be configured to determine the baseband frequency 1299 based on the third component signals. For example, the processor 1106 may be configured to select component signals based on the third radio frequency signal such that the third component signals exclude reference signals, exclude reference signals of a type of reference signal and/or include a number of reference signals that is smaller than a threshold. Thus, the communication device 1102 may be configured to effectively avoid the loss of reference signals to increase the performance of the communication device 1102. Further, the communication device 1102 may be configured to flexibly process signals based on an uncomplex high-pass filter.

In an example, the second component radio frequency signals include second reference signals. The frequencies that are associated with the second reference signals may be included in a frequency range that has the same width as the fifth frequency range 1294. The processor 1106 may be configured to determine the baseband frequency 1299 based on the second reference signals. Thus, the communication device 1102 may be configured to efficiently and effectively reduce the loss of reference signals that are required for reliably processing the radio frequency signal.

It should be noted that aspects of communication device based on FIG. 11 may be combined with aspects of the communication devices based on FIG. 1, FIG. 5 and FIG. 9.

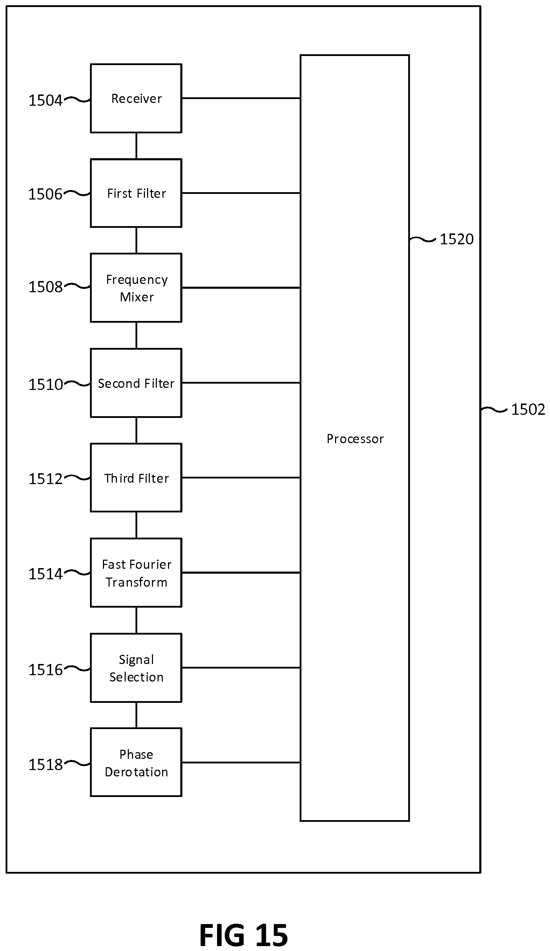

**FIG. 15** shows a schematic diagram of a communication device 1502 that may include a receiver 1504, first filter 1506, a frequency mixer 1508, a second filter 1510, a third filter 1512, a Fast Fourier Transform circuit 1514, a signal selection circuit 1516, a phase rotation circuit 1518 and a processor 1520. The processor 1520 may be based on the processor 506 of the communication device 502 based on FIG. 5 or the processor 1106 of the communication device 1102 based on FIG. 11. The processor 1520 may be configured to determine the second shift frequency 610 or the baseband frequency 1299 based on the first component radio frequency signal based on the radio frequency signal. The radio frequency signal may include the third radio frequency signal.

The receiver 1504 may be configured to receive a radio frequency signal and output the radio frequency signal to the first filter 1506.

The first filter 1506 may be a band-pass filter configured to filter a frequency band that includes the first component radio frequency signal based on the radio frequency signal to form an output signal.

The frequency mixer 1508 may be configured to receive the output signal of the first filter 1506. Further, the frequency mixer 1508 may be configured to shift frequencies based on the received output signal to form an output signal.

In an example, the processor 1520 may be configured to determine second signal to noise ratios based on the second component radio frequency signals. Further, the processor 1520 may be configured to select a smallest signal to noise ratio from the signal to noise ratios. The frequency mixer 1508 may be configured to shift the frequencies based on the radio frequency signal by the second shift frequency only if the smallest signal to noise ratio is greater than a threshold. Thus, the communication device 1502 may be configured to ensure a reliable processing of reference signals in bad radio conditions.

The second filter 1510 may be configured to receive the output signal of the frequency mixer 1508. Further, the second filter 1510 may be a low-pass filter configured to filter the received output signal based on a filter frequency range to form an output signal.

In an example, the filter frequency range may be the filter frequency range 1208.

In an example, the filter frequency range may be the processing frequency range 1212.

In an example, the baseband frequency range may be included in the filter frequency range 1208 and based on the baseband frequency 1299.

In an example, the processor 1520 may be configured to determine the filter frequency range based on the third frequency range 602 and the frequency difference based on the center frequency 604 of the third frequency range 602 and the first frequency 606.

The third filter 1512 may be configured to receive the output signal of the second filter 1510. Further, the third filter 1512 may be a high-pass filter configured to preserve component signals that are associated with frequencies different from the second frequency range 494 and to remove component signals that are associated with frequencies that are included in the second frequency range 494 based on the received output signal to form an output signal.

The Fast Fourier Transform circuit 1514 may be configured to receive the output signal of the third filter 1512. Further, the Fast Fourier Transform circuit 1514 may be configured to process the received output signal based on a FFT process to form an output signal.

The FFT process may be based on a FFT processing bandwidth that is independent from the selection of the first component radio frequency signal and the corresponding shift frequency or baseband frequency.

In an example, the FFT process may be based on a 128 point Fast Fourier Transform process. In case the received third radio frequency signal is in accordance with the Narrowband Internet of Things communication technology the FFT process may be based on a sixteen point Fast Fourier Transform process.

The signal selection circuit 1516 may be configured to receive the output signal of the Fast Fourier Transform circuit 1514. Further, the signal selection circuit 1516 may be configured to select component signals and/or resource elements based on the received output signal and the baseband frequency range to form an output signal.

The phase rotation circuit 1518 may be configured to receive the output signal of the signal selection circuit 1516. Further, the phase rotation circuit 1518 may be configured to rotate phases based on the received output signal and a rotation of the phases based on the Fast Fourier Transform process.

It should be noted that aspects of communication device based on FIG. 15 may be combined with aspects of the communication devices based on FIG. 1, FIG. 5, FIG. 9 and FIG. 11.

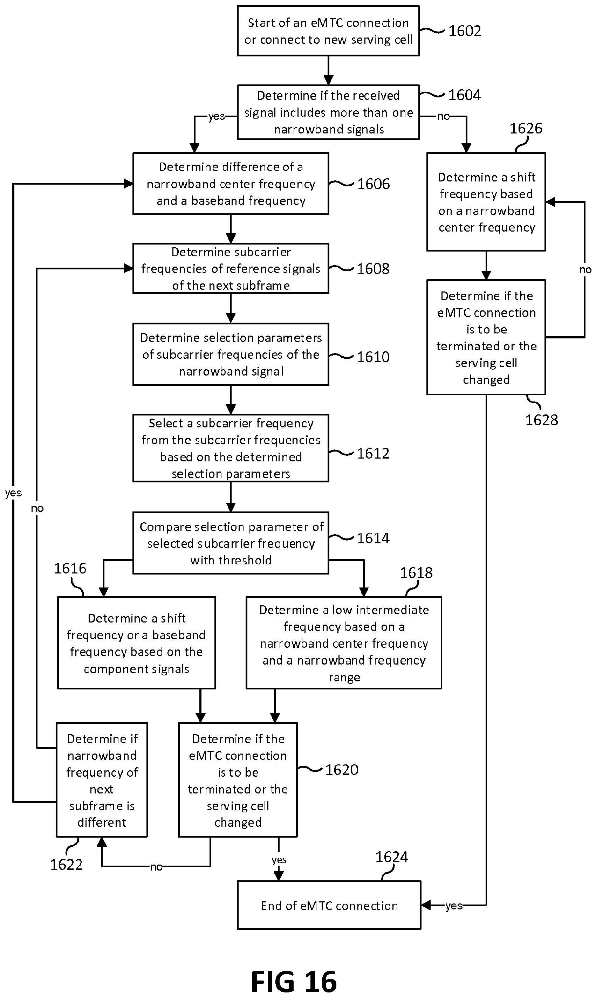

**FIG. 16** shows a flow diagram that illustrates a process based on a communication device based on Fig. 5, Fig. 9, Fig. 11 or Fig. 15.

In 1602, the communication device may start a new enhanced machine type communications (eMTC) connection or connect to a new serving cell. Further, the receiver may be configured to receive a radio frequency signal. Further, the radio frequency signal may include the first signal that may include at least one narrowband signal. The at least one narrowband signal may be associated with frequencies of a narrowband frequency range related to the radio frequency signal represented in the frequency domain. The first signal may be associated with the first frequency range related to the first signal represented in the frequency domain.

In 1604, the processor may determine if the radio frequency signal of the new connection includes more than one narrowband signals. If the processor determines that the radio frequency signal includes more than one narrowband signals the processor may proceed to 1606. If the processor determines that the radio frequency signal includes at most one narrowband signal the processor may proceed to 1626.

In 1606, the processor may select a narrowband signal from the narrowband signals. Further, the processor may determine the difference of a narrowband center frequency and a baseband frequency of the selected narrowband signal.

In 1608, the processor may determine second subcarrier frequencies that are associated with reference signals that are included in a first subframe.

In 1610, the processor may determine selection parameters based on second component radio frequency signals that may be associated with the second subcarrier frequencies. A selection parameter of a component radio frequency signal of the second component radio frequency signals may be a signal to noise ratio based on the component radio frequency signal. The processor may be configured to determine a quality of service based on the selection parameters.

In an example, the selection parameter of a component radio frequency signal may be relative to a parameter based on a second subframe that precedes the first subframe. For example, the selection parameter of the component radio frequency signal may be a ratio of the determined signal to noise ratio to a signal to noise ratio based on the second subframe.

In 1612, the processor may select a subcarrier frequency from the second subcarrier frequencies based on the determined selection parameters. In an example, the processor may be configured to select the subcarrier frequency that is associated with the component radio frequency signal that is based on the smallest signal to noise ratio or the smallest ratio of signal to noise ratios.

In 1614, the processor may compare the determined selection parameter of the selected subcarrier frequency with a threshold. If the signal to noise ratio or the ratio of signal to noise ratios of the selected subcarrier frequency is greater than the threshold the processor may proceed to 1616. If the signal to noise ratio or the ratio of signal to noise ratios of the selected subcarrier frequency is smaller than the threshold the processor may proceed to 1618.

In 1616, the processor may determine the shift frequency based on at least one of FIG. 5, FIG. 6, FIG. 7, FIG. 8, FIG. 9 or FIG. 10 or the baseband frequency based on at least one of FIG. 11, FIG. 12, FIG. 13, FIG. 14 or FIG. 15. Further, the processor may be configured to wait for the next subframe to be handled.

In 1618, the processor may determine a low intermediate frequency based on a narrowband center frequency and a narrowband frequency range.

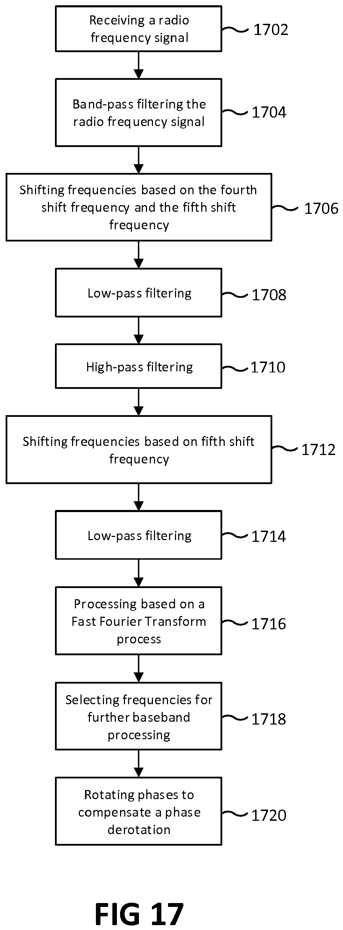

The processor may be configured to determine a fourth shift frequency. The fourth shift frequency may be a difference of the narrowband center frequency and the baseband frequency. Thus, the fourth shift frequency may be a center offset frequency. Further, the processor may be configured to determine a fifth shift frequency based on the narrowband frequency range. The fifth shift frequency may be an intermediate frequency. The fifth shift frequency may be greater than the narrowband frequency range divided by two. The processor may be configured to determine a fifth signal based on shifting frequencies based on the radio frequency signal by the fourth shift frequency and the fifth shift frequency. The frequency shifter may be configured to shift the narrowband frequency range to a baseband frequency range such that the baseband frequency is not included in the shifted narrowband frequency range. Further, the communication device may be configured to perform the method based on FIG. 17. Thus, the communication device may be configured to effectively process the radio frequency signal in bad radio conditions.

Moreover, the processor may be configured to wait for the next subframe to be handled.

In 1620, the processor may determine if the eMTC connection is to be terminated. Further, in an example, the processor may determine if the serving cell changed. If the eMTC connection is not to be terminated and the serving cell is unchanged the processor may proceed to 1622. If the eMTC connection is to be terminated or the serving cell is changed the processor may proceed to 1624.

In 1622, the processor may determine if a narrowband center frequency of a third subframe that follows the first subframe is different from the narrowband center frequency of the first subframe. If the narrowband center frequency of the third subframe is different from the narrowband center frequency of the first subframe the processor may proceed to 1606. If the narrowband center frequency of the third subframe is the same as the narrowband center frequency of the first subframe the processor may proceed to 1608.

In 1624, the processor may terminate the eMTC connection or receive a termination notice thereof.

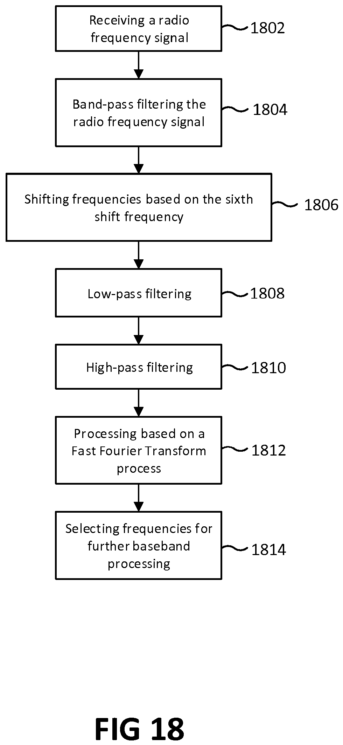

In 1626, the processor may determine a sixth shift frequency based on the center frequency of the first frequency range. The sixth shift frequency may be a difference of the center frequency of the first frequency range and the baseband frequency. The processor may determine a seventh signal based on shifting frequencies based on the radio frequency signal and the sixth shift frequency. Further, the processor may be configured to perform the method based on FIG. 18 based on the first signal, the first frequency range and the sixth shift frequency. Moreover, the processor may be configured to wait for the next subframe to be handled.

In 1628, the processor may determine if the eMTC connection is to be terminated. Further, in an example, the processor may determine if the serving cell changed. If the processor determines that the eMTC connection is not to be terminated and the serving cell is unchanged the processor may proceed to 1626. If the processor determines that the eMTC connection is to be terminated or the serving cell is changed the processor may proceed to 1624.

**FIG. 17** shows a flow diagram that illustrates a method based on Fig. 16.

The method may include, in 1702, receiving a radio frequency signal.

The method may further include, in 1704, band-pass filtering the radio frequency signal to filter a frequency band that includes the narrowband frequency range.

The method may further include, in 1706, shifting frequencies based on the filtered radio frequency signal based on the fourth shift frequency and the fifth shift frequency to form a sixth signal. The shifted narrowband frequency range may not include the baseband frequency.

The method may further include, in 1708, low-pass filtering the sixth signal to remove component signals that are associated with frequencies that are not included in a filter frequency range. The filter frequency range may be based on the narrowband frequency range, the fourth shift frequency, the fifth shift frequency and the baseband frequency. The filter frequency range may include the shifted narrowband frequency range.

The method may further include, in 1710, high-pass filtering the low-pass filtered signal based on the second frequency range.

The method may further include, in 1712, shifting frequencies based on the high-pass filtered signal based on the fifth shift frequency such that a center frequency of the frequency shifted narrowband frequency range is shifted to the baseband frequency.

The method may further include, in 1714, low-pass filtering the frequency shifted signal to remove component signals that are associated with frequencies that are not included in a frequency shifted narrowband frequency range.

The method may further include, in 1716, processing the low-pass filtered signal of 1714 based on a FFT process.

The method may further include, in 1718, selecting frequencies based on the FFT processed signal and the narrowband signal.

The method may further include, in 1720, rotating phases of component signals based on the FFT processed signal and the selected frequencies. The rotating may be configured to compensate a rotation based on a cyclic prefix and the FFT process.

Thus, the communication device may be configured to effectively process the radio frequency signal in bad radio conditions.

In an example, the frequency shifting based on 1706 may be configured to shift the frequencies based on the radio frequency signal based on a sum, or in an example a difference, of the fourth shift frequency and the fifth shift frequency.

In an example, the method may be performed based on the communication device based on FIG. 15.

In an example, if the processor determines that each component radio frequency signal of the second component radio frequency signals includes a reference signal the frequency mixer may be configured to shift the frequencies based on the radio frequency signal by the fourth shift frequency and the fifth shift frequency.

**FIG. 18** shows a flow diagram that illustrates a method based on Fig. 16.

The method may include, in 1802, receiving a radio frequency signal.

The method may further include, in 1804, band-pass filtering the radio frequency signal to filter a frequency band that includes the narrowband frequency range.

The method may further include, in 1806, shifting frequencies based on the filtered signal based on the sixth shift frequency to form the seventh signal. The shifted narrowband frequency range may not include the baseband frequency.

The method may further include, in 1808, low-pass filtering the seventh signal to remove component signals that are associated with frequencies that are not included in the shifted narrowband frequency range. The filter frequency range may be based on the narrowband frequency range, the fourth shift frequency and the baseband frequency.

The method may further include, in 1810, high-pass filtering the low-pass filtered signal based on the second frequency range.

The method may further include, in 1812, processing the high-pass filtered signal based on a FFT process.

The method may further include, in 1814, selecting frequencies based on the FFT processed signal and the narrowband signal.

Thus, the communication device may be configured to increase the performance in bad radio conditions.

In an example, the method may be performed based on the communication device based on FIG. 15. If the processor determines that the radio frequency signal includes at most one narrowband signal the frequency mixer may be configured to shift the frequencies based on the radio frequency signal by the fourth shift frequency.

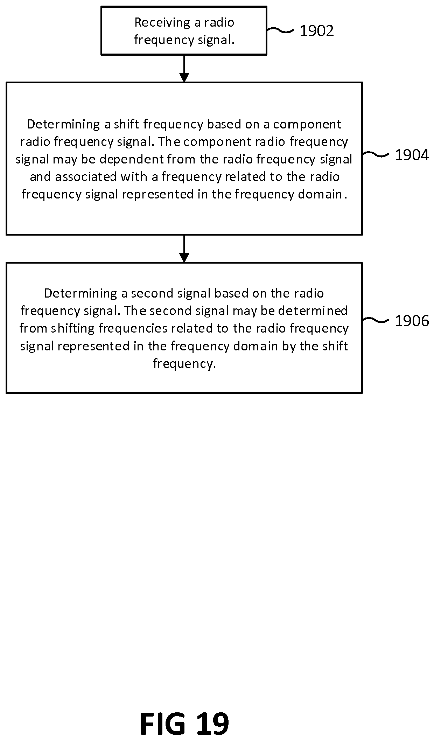

**FIG. 19** shows a method for radio frequency communication.

The method may include, in 1902, receiving a radio frequency signal.

The method may further include, in 1904, determining a shift frequency based on a component radio frequency signal. The component radio frequency signal may be dependent from the radio frequency signal and associated with a frequency related to the radio frequency signal represented in the frequency domain.

The method may further include, in 1906, determining a second signal based on the radio frequency signal. The second signal may be determined from shifting frequencies related to the radio frequency signal represented in the frequency domain by the shift frequency.

Thus, the method may be configured to efficiently and effectively process the radio frequency signal. Further, the method may be configured to efficiently reduce the loss of signals that are required to reliably process the radio frequency signal.

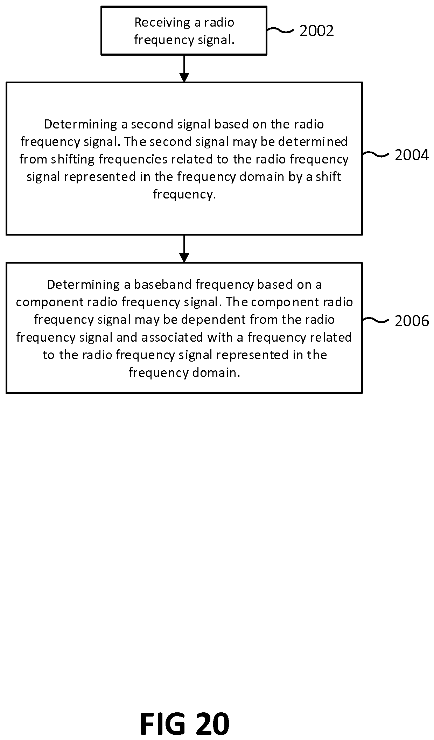

In an example, the method of FIG. 20 may be performed by a communication device based on FIG. 5.

**FIG. 20** shows a method for radio frequency communication.

The method may include, in 2002, receiving a radio frequency signal.

The method may include, in 2004, determining a second signal based on the radio frequency signal. The second signal may be determined from shifting frequencies related to the radio frequency signal represented in the frequency domain by a shift frequency.

The method may include, in 2006, determining a baseband frequency based on a component radio frequency signal. The component radio frequency signal may be dependent from the radio frequency signal and associated with a frequency related to the radio frequency signal represented in the frequency domain.

Thus, the method may be configured to efficiently and effectively process the radio frequency signal. Further, the method may be configured to efficiently reduce the loss of signals that are required to reliably process the radio frequency signal.

In an example, the method of FIG. 20 may be performed by a communication device based on FIG. 11.

It should be noted that aspects of the examples of FIG. 1, FIG. 2, FIG. 3, FIG. 4, FIG. 5, FIG. 6, FIG. 7, FIG. 8, FIG. 9, FIG. 10, FIG. 11, FIG. 12, FIG. 13, FIG. 14, FIG. 15, FIG. 16, FIG. 17 and FIG. 18 may be combined with aspects of the above described methods.

While the invention has been particularly shown and described with reference to specific embodiments, it should be understood by those skilled in the art that various changes in form and detail may be made therein without departing from the scope of the invention as defined by the appended claims. The scope of the invention is thus indicated by the appended claims.

## Claims

1. A communication device (502), comprising:
a receiver (504) configured to receive a radio frequency signal,
wherein the radio frequency signal is in accordance with a Long Term Evolution radio communication technology,
wherein the radio frequency signal comprises a first radio frequency signal that is associated with a first frequency range (202) related to a frequency domain representation of the radio frequency signal,
a processor (506) configured to determine
a shift frequency (610), based on a component radio frequency signal; and
a second signal based on the radio frequency signal,
wherein the first radio frequency signal comprises the component radio frequency signal that is associated with a second frequency range (602) that includes a first subcarrier frequency (606) related to a frequency domain representation of the radio frequency signal,
wherein the first frequency range (202) comprises the second frequency range (602),
wherein the second signal is determined based on shifting frequencies of the second frequency range (602) by the shift frequency (610) to a baseband frequency range (208, 608),
wherein the baseband frequency range (208, 608) comprises a filter frequency range (494) to remove the shifted component radio frequency signal,
wherein the processor (506) is configured to determine the shift frequency (610) such that the first subcarrier frequency (606) is shifted to a baseband frequency (699) that is included in the filter frequency range (494).

2. The communication device (502) of Claim 1,
wherein second component radio frequency signals are based on the radio frequency signal and associated with second frequencies related to the radio frequency signal represented in the frequency domain, respectively,
wherein the processor (506) is configured to determine the component radio frequency signal based on the second component radio frequency signals.

3. The communication device (502) of Claim 2,
wherein the component radio frequency signal comprises third signals,
wherein the component radio frequency signal is determined based on at least one of a first number of the third signals or types of the third signals.

4. The communication device (502) of Claim 3,
wherein the third signals are reference signals.

5. The communication device (502) of any one of Claims 2 to 4,
wherein the component radio frequency signal is determined to exclude reference signals.

6. The communication device (502) of any one of Claims 2 to 5,
wherein the second component radio frequency signals are associated with second numbers of reference signals of the second component radio frequency signals, respectively,
wherein a number of reference signals of the component radio frequency signal is the smallest number from the second numbers.

7. A method for radio frequency communication, performed by a device, comprising:
receiving a radio frequency signal,
wherein the radio frequency signal is in accordance with a Long Term Evolution radio communication technology,
wherein the radio frequency signal comprises a first radio frequency signal that is associated with a first frequency range (202) related to a frequency domain representation of the radio frequency signal,
determining a shift frequency (610) based on a component radio frequency signal,
determining a second signal based on the radio frequency signal,
wherein the first radio frequency signal comprises the component radio frequency signal that is associated with a second frequency range (602) that includes a first subcarrier frequency (606) related to a frequency domain representation of the radio frequency signal,
wherein the first frequency range (202) comprises the second frequency range (602),
wherein the second signal is determined based on shifting frequencies of the second frequency range (602) by the shift frequency (610) to a baseband frequency range (208, 608),
wherein the baseband frequency range (208, 608) comprises a filter frequency range (494) to remove the shifted component radio frequency signal,
wherein the shift frequency (610) is determined such that the first subcarrier frequency (606) is shifted to a baseband frequency (699) that is included in the filter frequency range (494).

8. The method of claim 7, further comprising:
determining the component radio frequency signal based on second component radio frequency signals,
wherein the second component radio frequency signals are based on the radio frequency signal and associated with second frequencies related to the radio frequency signal represented in the frequency domain, respectively.

9. The method of claim 8,
wherein the component radio frequency signal comprises third signals,
wherein the component radio frequency signal is determined based on at least one of a first number of the third signals or types of the third signals.

10. The method of claim 9,
wherein the third signals are reference signals.

11. The method of any one of Claims 8 to 10,
wherein the component radio frequency signal is determined to exclude reference signals.

12. The method of any one of Claims 8 to 11,
wherein the second component radio frequency signals are associated with second numbers of reference signals of the second component radio frequency signals, respectively,
wherein a number of reference signals of the component radio frequency signal is the smallest number from the second numbers.

## Patentansprüche

1. Kommunikationsvorrichtung (502), umfassend:
einen Empfänger (504), der konfiguriert ist, um ein Funkfrequenzsignal zu empfangen,
wobei das Funkfrequenzsignal einer Long Term Evolution-Funkkommunikationstechnologie entspricht,
wobei das Funkfrequenzsignal ein erstes Funkfrequenzsignal umfasst, das einem ersten Frequenzbereich (202) zugeordnet ist, der sich auf eine Frequenzbereichsdarstellung des Funkfrequenzsignals bezieht,
einen Prozessor (506), der konfiguriert ist, um
eine Verschiebungsfrequenz (610) basierend auf einem Komponentenfunkfrequenzsignal zu bestimmen; und
ein zweites Signal basierend auf dem Funkfrequenzsignal zu bestimmen,
wobei das erste Funkfrequenzsignal das Komponentenfunkfrequenzsignal umfasst, das einem zweiten Frequenzbereich (602) zugeordnet ist, der eine erste Unterträgerfrequenz (606) beinhaltet, die sich auf eine Frequenzbereichsdarstellung des Funkfrequenzsignals bezieht,
wobei der erste Frequenzbereich (202) den zweiten Frequenzbereich (602) umfasst,
wobei das zweite Signal basierend auf Verschiebungsfrequenzen des zweiten Frequenzbereichs (602) um die Verschiebungsfrequenz (610) zu einem Basisbandfrequenzbereich (208, 608) bestimmt wird,
wobei der Basisbandfrequenzbereich (208, 608) einen Filterfrequenzbereich (494) umfasst, um das verschobene Komponentenfunkfrequenzsignal zu entfernen,
wobei der Prozessor (506) konfiguriert ist, um die Verschiebungsfrequenz (610) derart zu bestimmen, dass die erste Unterträgerfrequenz (606) zu einer Basisbandfrequenz (699) verschoben wird, die in dem Filterfrequenzbereich (494) enthalten ist.

2. Kommunikationsvorrichtung (502) nach Anspruch 1,
wobei zweite Komponentenfunkfrequenzsignale auf dem Funkfrequenzsignal basieren und zweiten Frequenzen zugeordnet sind, die sich auf das in dem Frequenzbereich dargestellte Funkfrequenzsignal beziehen,
wobei der Prozessor (506) konfiguriert ist, um das Komponentenfunkfrequenzsignal basierend auf den zweiten Komponentenfunkfrequenzsignalen zu bestimmen.

3. Kommunikationsvorrichtung (502) nach Anspruch 2,
wobei das Komponentenfunkfrequenzsignal dritte Signale umfasst,
wobei das Komponentenfunkfrequenzsignal basierend auf mindestens einem von einer ersten Anzahl der dritten Signale oder Typen der dritten Signale bestimmt wird.

4. Kommunikationsvorrichtung (502) nach Anspruch 3,
wobei die dritten Signale Referenzsignale sind.

5. Kommunikationsvorrichtung (502) nach einem der Ansprüche 2 bis 4,
wobei das Komponentenfunkfrequenzsignal bestimmt wird, um Referenzsignale auszuschließen.

6. Kommunikationsvorrichtung (502) nach einem der Ansprüche 2 bis 5,
wobei die zweiten Komponentenfunkfrequenzsignale jeweils zweiten Anzahlen von Referenzsignalen der zweiten Komponentenfunkfrequenzsignale zugeordnet sind,
wobei eine Anzahl von Referenzsignalen des Komponentenfunkfrequenzsignals die kleinste Anzahl von den zweiten Anzahlen ist.

7. Verfahren zur Funkfrequenzkommunikation, durchgeführt durch eine Vorrichtung, umfassend:
Empfangen eines Funkfrequenzsignals,
wobei das Funkfrequenzsignal einer Long Term Evolution-Funkkommunikationstechnologie entspricht,
wobei das Funkfrequenzsignal ein erstes Funkfrequenzsignal umfasst, das einem ersten Frequenzbereich (202) zugeordnet ist, der sich auf eine Frequenzbereichsdarstellung des Funkfrequenzsignals bezieht,
Bestimmen einer Verschiebungsfrequenz (610) basierend auf einem Komponentenfunkfrequenzsignal,
Bestimmen eines zweiten Signals basierend auf dem Funkfrequenzsignal,
wobei das erste Funkfrequenzsignal das Komponentenfunkfrequenzsignal umfasst, das einem zweiten Frequenzbereich (602) zugeordnet ist, der eine erste Unterträgerfrequenz (606) beinhaltet, die sich auf eine Frequenzbereichsdarstellung des Funkfrequenzsignals bezieht,
wobei der erste Frequenzbereich (202) den zweiten Frequenzbereich (602) umfasst,
wobei das zweite Signal basierend auf Verschiebungsfrequenzen des zweiten Frequenzbereichs (602) um die Verschiebungsfrequenz (610) zu einem Basisbandfrequenzbereich (208, 608) bestimmt wird,
wobei der Basisbandfrequenzbereich (208, 608) einen Filterfrequenzbereich (494) umfasst, um das verschobene Komponentenfunkfrequenzsignal zu entfernen,
wobei die Verschiebungsfrequenz (610) derart bestimmt wird, dass die erste Unterträgerfrequenz (606) zu einer Basisbandfrequenz (699) verschoben wird, die in dem Filterfrequenzbereich (494) enthalten ist.

8. Verfahren nach Anspruch 7, ferner umfassend:
Bestimmen des Komponentenfunkfrequenzsignals basierend auf zweiten Komponentenfunkfrequenzsignalen,
wobei die zweiten Komponentenfunkfrequenzsignale auf dem Funkfrequenzsignal basieren und zweiten Frequenzen zugeordnet sind, die sich auf das in dem Frequenzbereich dargestellte Funkfrequenzsignal beziehen.

9. Verfahren nach Anspruch 8,
wobei das Komponentenfunkfrequenzsignal dritte Signale umfasst,
wobei das Komponentenfunkfrequenzsignal basierend auf mindestens einem von einer ersten Anzahl der dritten Signale oder Typen der dritten Signale bestimmt wird.

10. Verfahren nach Anspruch 9,
wobei die dritten Signale Referenzsignale sind.

11. Verfahren nach einem der Ansprüche 8 bis 10,
wobei das Komponentenfunkfrequenzsignal bestimmt wird, um Referenzsignale auszuschließen.

12. Verfahren nach einem der Ansprüche 8 bis 11,
wobei die zweiten Komponentenfunkfrequenzsignale jeweils zweiten Anzahlen von Referenzsignalen der zweiten Komponentenfunkfrequenzsignale zugeordnet sind,
wobei eine Anzahl von Referenzsignalen des Komponentenfunkfrequenzsignals die kleinste Anzahl von den zweiten Anzahlen ist.

## Revendications

1. Un dispositif de communication (502), comprenant :
un récepteur (504) configuré pour recevoir un signal radiofréquence,
dans lequel le signal radiofréquence est conforme à une technologie de communication radio Évolution à long terme,
dans lequel le signal radiofréquence comprend un premier signal radiofréquence qui est associé à une première plage de fréquences (202) en relation avec une représentation de domaine fréquentiel du signal radiofréquence,
un processeur (506) configuré pour déterminer :
une fréquence de décalage (610), basée sur une composante de signal radiofréquence ; et
un second signal basé sur le signal radiofréquence,
dans lequel le premier signal radiofréquence comprend la composante de signal radiofréquence qui est associée à une seconde plage de fréquences (602) qui inclut une première fréquence de sous-porteuse (606) en relation avec une représentation de domaine fréquentiel du signal radiofréquence,
dans lequel la première plage de fréquences (202) comprend la seconde plage de fréquences (602),
dans lequel le second signal est déterminé sur la base de fréquences de décalage de la seconde plage de fréquences (602) par la fréquence de décalage (610) vers une plage de fréquences de bande de base (208, 608),
dans lequel la plage de fréquences de bande de base (208, 608) comprend une plage de fréquences de filtrage (494) pour éliminer la composante de signal radiofréquence décalée,
dans lequel le processeur (506) est configuré pour déterminer la fréquence de décalage (610) de telle manière que la première fréquence de sous-porteuse (606) soit décalée vers une fréquence de bande de base (699) qui est incluse dans la plage de fréquences de filtrage (494).

2. Le dispositif de communication (502) de la revendication 1,
dans lequel des secondes composantes de signal radiofréquence sont basées sur le signal radiofréquence et sont associées à des secondes fréquences en relation avec le signal radiofréquence représenté dans le domaine fréquentiel, respectivement,
dans lequel le processeur (506) est configuré pour déterminer la composante de signal radiofréquence sur la base des secondes composantes de signal radiofréquence.

3. Le dispositif de communication (502) de la revendication 2,
dans lequel la composante de signal radiofréquence comprend trois signaux,
dans lequel la composante de signal radiofréquence est déterminée sur la base d'au moins l'un parmi un premier nombre des troisièmes signaux ou bien des types des troisième signaux.

4. Le dispositif de communication (502) de la revendication 3,
dans lequel les troisièmes signaux sont des signaux de référence.

5. Le dispositif de communication (502) de l'une des revendications 2 à 4,
dans lequel la composante de signal radiofréquence est déterminée pour exclure les signaux de référence.

6. Le dispositif de communication (502) de l'une des revendications 2 à 5,
dans lequel les secondes composantes de signal radiofréquence sont associées à des seconds nombres de signaux de référence des secondes composantes de signal radiofréquence, respectivement,
dans lequel un nombre de signaux de référence de la composante de signal radiofréquence est le plus petit nombre parmi les seconds nombres.

7. Un procédé de communication radiofréquence, mis en œuvre par un dispositif, comprenant :
la réception d'un signal radiofréquence,
dans lequel le signal radiofréquence est conforme à une technologie de communication radio Évolution à long terme,
dans lequel le signal radiofréquence comprend un premier signal radiofréquence qui est associé à une première plage de fréquences (202) en relation avec une représentation de domaine fréquentiel du signal radiofréquence,
la détermination d'une fréquence de décalage (610) basée sur une composante de signal radiofréquence,
la détermination d'un second signal basé sur le signal radiofréquence,
dans lequel le premier signal radiofréquence comprend la composante de signal radiofréquence qui est associée à une seconde plage de fréquences (602) qui inclut une première fréquence de sous-porteuse (606) en relation avec une représentation de domaine fréquentiel du signal radiofréquence,
dans lequel la première plage de fréquences (202) comprend la seconde plage de fréquences (602),
dans lequel le second signal est déterminé sur la base de fréquences de décalage de la seconde plage de fréquences (602) par la fréquence de décalage (610) vers une plage de fréquences de bande de base (208, 608),
dans lequel la plage de fréquences de bande de base (208, 608) comprend une plage de fréquences de filtrage (494) pour éliminer la composante de signal radiofréquence décalée,
dans lequel la fréquence de décalage (610) est déterminée de telle manière que la première fréquence de sous-porteuse (606) soit décalée vers une fréquence de bande de base (699) qui est incluse dans la plage de fréquences de filtrage (494).

8. Le procédé de la revendication 7, comprenant en outre :
la détermination de la composante de signal radiofréquence sur la base de secondes composantes de signal radiofréquence,
dans lequel les secondes composantes de signal radiofréquence sont basées sur le signal radiofréquence et sont associées à des secondes fréquences en relation avec le signal radiofréquence représenté dans le domaine fréquentiel, respectivement.

9. Le procédé de la revendication 8,
dans lequel la composante de signal radiofréquence comprend trois signaux,
dans lequel la composante de signal radiofréquence est déterminée sur la base d'au moins l'un parmi un premier nombre des troisièmes signaux ou bien des types des troisième signaux.

10. Le procédé de la revendication 9,
dans lequel les troisièmes signaux sont des signaux de référence.

11. Le procédé de l'une des revendications 8 à 10,
dans lequel la composante de signal radiofréquence est déterminée pour exclure les signaux de référence.

12. Le procédé de l'une des revendications 8 à 11,
dans lequel les secondes composantes de signal radiofréquence sont associées à des seconds nombres de signaux de référence des secondes composantes de signal radiofréquence, respectivement,
dans lequel un nombre de signaux de référence de la composante de signal radiofréquence est le plus petit nombre parmi les seconds nombres.
